# EUROPÄISCHE PATENTANMELDUNG

(11) **EP 2 790 145 A1**
(43) Veröffentlichungstag der Anmeldung: **15.10.2014**
(21) Anmeldenummer: 14001231.1
(22) Anmeldetag: 02.04.2014
(51) Int. Cl.: G06Q 20/32, G06F 21/57, G06Q 20/40

(54) **Verfahren und System zum bargeldlosen Bezahlen oder Geldabheben mit einem mobilen Kundenterminal**

(30) Priorität: 08.04.2013 DE 102013006549
(71) Anmelder: Fiducia IT AG, 76227 Karlsruhe (DE)
(72) Erfinder: Riethmüller, Harry, 71083 Herrenberg (DE); Zimmermann, Jens, 75179 Pforzheim (DE); Wenzel, Roland, 75433 Maulbronn (DE)
(74) Vertreter: Bartels & Partner

(57) **Zusammenfassung**

Die Erfindung betrifft ein Verfahren und ein System (1) zum bargeldlosen Bezahlen oder zum Geldabheben an einem Geldausgabeautomaten (106), wobei das System (1) ein mobiles Kundenterminal (2), ein Händlerterminal (6) oder einen Geldausgabeautomaten (106) sowie ein den Bezahlvorgang oder den Geldabhebevorgang steuerndes Payment Gateway (10) umfasst. Das System (1) umfasst weiterhin eine dem Payment Gateway (10) elektronisch zugänglich Kundendatenbank (12), in welche im Rahmen einer Registrierung des Kundenterminals (2) übertragene Integritätsdaten (16) des Kundenterminals (2) gespeichert sind. Für das Payment Gateway (10) ist anhand eines Vergleiches von vom Kundenterminal (2) während eines Bezahlvorgangs oder eines Geldabhebevorgangs übertragenen Integritätsdaten (16) mit den in der Kundendatenbank (12) gespeicherten Integritätsdaten (16) überprüfbar, ob das Kundenterminal (2) noch integer ist oder bereits durch eine Schadsoftware korrumpiert ist.

## Beschreibung

Die Erfindung betrifft ein Verfahren und ein System zum bargeldlosen Bezahlen oder Geldabheben mit einem mobilen Kundenterminal.

Das bargeldlose Bezahlen von Waren und Dienstleistungen oder sonstigen Angeboten ist mittlerweile ebenso ein fester Bestandteil des alltäglichen Lebens geworden wie das Geldabheben an einem Geldausgabeautomaten. Die derzeit verbreiteten Verfahren bedienen sich sogenannter Kredit- oder Debit-Karten, auf denen auf einem Magnetstreifen oder einem integrierten Schaltkreis Identifikationsdaten des Kunden oder einer Kontoverbindung des Kunden gespeichert sind. Derartige Kartensysteme sind immer wieder das Ziel von Betrügern und Gegenstand betrügerischer Machenschaften.

Parallel hierzu hat sich insbesondere in den zurückliegenden fünfzehn Jahren die Verwendung von Mobiltelefonen weitgehend durchgesetzt, in jüngerer Zeit auch von sogenannten Smartphones, die über eine erhöhte Funktionalität verfügen und insbesondere das Ausführen von Anwendungsprogrammen erlauben. Es gab auch bereits zahllose Anstrengungen, ein Verfahren zum bargeldlosen Bezahlen unter Verwendung derartiger Mobiltelefone zu etablieren. Ein Problem hierbei ist nach wie vor die Manipulationsfähigkeit derartiger Mobiltelefone durch das Aufspielen von Schadsoftware, welche sicherheitsrelevante Identifikationsdaten des Kunden ausspionieren und/oder manipulieren können, ohne dass der Anwender hiervon Kenntnis erhält.

Der Erfindung liegt daher die Aufgabe zugrunde, ein Verfahren und ein zugehöriges System zum bargeldlosen Bezahlen mit einem mobilen Kundenterminal bereitzustellen, das einerseits einfach und schnell handhabbar ist, insbesondere geringe Anforderungen an die Menge der zu übertragenden Daten und damit an die erforderliche Bandbreite des Kommunikationskanals stellt, und dennoch eine gegenüber Manipulationen gesicherte Übertragung gewährleistet. Der Bezahlvorgang mit mobilen Kundenendgeräten soll sicher, einfach, zuverlässig und leistungsfähig bereitgestellt werden.

Diese Aufgabe ist durch das im Anspruch 1 bestimmte Verfahren sowie durch das im nebengeordneten Anspruch bestimmte System gelöst. Besondere Ausführungsarten der Erfindung sind in den Unteransprüchen bestimmt.

Die Erfindung betrifft ein Verfahren und ein System zum bargeldlosen Bezahlen oder zum Geldabheben an einem Geldausgabeautomaten, wobei das System ein mobiles Kundenterminal, ein Händlerterminal oder einen Geldausgabeautomaten sowie ein den Bezahlvorgang oder den Geldabhebevorgang steuerndes Payment Gateway umfasst. Das System umfasst weiterhin eine dem Payment Gateway elektronisch zugänglich Kundendatenbank, in welche im Rahmen einer Registrierung des Kundenterminals übertragene Integritätsdaten des Kundenterminals gespeichert sind. Für das Payment Gateway ist anhand eines Vergleiches von vom Kundenterminal während eines Bezahlvorgangs oder eines Geldabhebevorgangs übertragenen Integritätsdaten mit den in der Kundendatenbank gespeicherten Integritätsdaten überprüfbar, ob das Kundenterminal noch integer ist oder bereits durch eine Schadsoftware korrumpiert ist.

In einer Ausführungsart betrifft die Erfindung ein Verfahren zum bargeldlosen Bezahlen mit einem mobilen Kundenterminal oder Kundenendgerät, bei dem es sich beispielsweise um ein Smartphone handeln kann, das mit einem den bargeldlosen Bezahlvorgang steuernden Payment Gateway, das eine zentrale Einrichtung des Verfahrens bildet, eine vorzugsweise drahtlose Datenverbindung aufbauen kann. In das Verfahren eingebunden ist außerdem ein Händlerterminal, bei dem es sich beispielsweise um eine Registrierkasse in einem Supermarkt handeln kann, und das mit dem Payment Gateway eine Datenverbindung aufbauen kann. Auch die Datenverbindung zwischen dem Händlerterminal und dem Payment Gateway kann drahtlos sein.

Das zugehörige System umfasst mindestens eine Datenbank, insbesondere eine Kundendatenbank und eine Händlerdatenbank. In der Kundendatenbank können Identifikationsdaten des Kunden und/oder des Kundenterminals gespeichert sein, außerdem Kontodaten des Kunden einschließlich Bankleitzahl und Kontonummer. Außerdem können in der Kundendatenbank auch Zugangsdaten des Kunden zu einem Onlinebanking-Verfahren gespeichert werden. In der Händlerdatenbank können beispielsweise Identifikationsdaten des Händlers, Terminal-Identifikationsdaten des Händlers, beispielsweise eine Identifikation der zugehörigen Registrierkasse, und Kontodaten des Händlers gespeichert sein.

Das Kundenterminal ist in der Kundendatenbank registriert, insbesondere sind in der Kundendatenbank Daten des Kundenterminals gespeichert, anhand denen sich die Integrität, d.h. ein nicht-korrumpierter Zustand des Kundenterminals, überprüfen lässt. Beispielsweise können in der Kundendatenbank Attribute des Kundenterminals wie beispielsweise die Hardwareausstattung einschließlich Prozessortyp und Speicherlayout und/oder der Softwarestand gespeichert sein, und zwar ein diesbezüglicher Zustand des Kundenterminals, wie er beispielsweise zum Zeitpunkt der Registrierung des Kundenterminals in der Kundendatenbank vorgelegen hat. Beispielsweise kann ermittelt und in der Kundendatenbank gespeichert werden, wo und/oder mit welcher Größe das Anwendungsprogramm oder die Anwendungsapplikation "mobiles Bezahlen" in dem Speicher des Kundenterminals gespeichert wurde. Anhand von zu einem späteren Zeitpunkt, beispielsweise im Rahmen eines bargeldlosen Bezahlvorgangs, von dem Kundenterminal an das Payment Gateway übermittelte aktuelle Daten kann das Payment Gateway überprüfen, ob das Kundenterminal nach wie vor in einem ordnungsgemäßen Zustand ist, oder ob zwischenzeitlich eine Schadsoftware oder ein sonstiger Angriff zu einer Korruption des Kundenterminals geführt hat.

Im Rahmen eines Bezahlvorgangs wird zunächst von dem Kunden an dem Kundenterminal ein Anwendungsprogramm zum bargeldlosen Bezahlen gestartet, wobei dieses Anwendungsprogramm durch Zugangsdaten geschützt ist, beispielsweise die Eingabe einer Kennung, etwa eines Passwortes, erfordert. Diese Zugangsdaten können im Rahmen eines Registrierungsvorganges zur Teilnahme am bargeldlosen Bezahlverfahren von dem Payment Gateway an den Kunden oder das Kundenterminal ausgeliefert worden sein.

Nach dem Starten des Anwendungsprogramms baut das Kundenterminal eine Datenverbindung mit dem Payment Gateway auf. Im Rahmen der Datenverbindung werden auf elektronischem Wege erste Identifikationsdaten des Kunden, beispielsweise die Zugangsdaten des Anwendungsprogramms, sowie Integritätsdaten von dem Kundenterminal an das Payment Gateway übertragen. Das Payment Gateway überprüft daraufhin durch einen Vergleich der empfangenen ersten Identifikationsdaten und der Integritätsdaten mit den entsprechenden in der Kundendatenbank gespeicherten Daten, ob das Kundenterminal zur Teilnahme am Verfahren zugelassen und in einem nicht-korrumpierten Zustand ist. Falls dies zutrifft ist, startet das Payment Gateway eine Session zum Auslösen eines Bezahlvorgangs.

Gegebenenfalls zeitlich parallel zum Starten des Anwendungsprogramms an dem Kundenterminal ermittelt das Händlerterminal die Bezahldaten einschließlich des Kaufpreises. Das Händlerterminal kann beispielsweise den zu bezahlenden Betrag dem Kunden mitteilen. An dem Händlerterminal wird die Funktion "mobiles Bezahlen" ausgewählt, beispielsweise durch den Händler selbst oder auch durch den Kunden. Der Kunde übermittelt auf einem von der Datenverbindung zwischen dem Kundenterminal und dem Payment Gateway und/oder zwischen dem Händlerterminal und dem Payment Gateway unabhängigen Übertragungsweg und insbesondere auch getrennt von der Laufzeitumgebung des Kundenterminals zweite Identifikationsdaten von dem Kunden oder dem Kundenterminal auf das Händlerterminal. Die Laufzeitumgebung ist ein Computerprogramm, dass gemeinsam mit dem Anwendungsprogramm oder der Anwendungsapplikation "mobiles Bezahlen" auf dem Kundenterminal ausgeführt wird und insbesondere zwischen dem Anwendungsprogramm oder der Anwendungsapplikation "mobiles Bezahlen" und dem Betriebssystem des Kundenterminals vermittelt. Durch die von der Laufzeitumgebung unabhängige Übermittlung der zweiten Identifikationsdaten wird die Sicherheit erhöht, weil die zweiten Identifikationsdaten nicht durch eine Schadsoftware ausspionierbar ist oder manipulierbar sind. Diese zweiten Identifikationsdaten wurden dem Kunden im Rahmen eines Registrierungsvorganges zur Teilnahme am Verfahren zum bargeldlosen Bezahlen übermittelt, beispielsweise von dem Payment Gateway oder auf dessen Veranlassung hin übermittelt.

Bei den zweiten Identifikationsdaten kann es sich grundsätzlich auch um eine Zeichenfolge handeln, die ausreichend lang ist, um ein zufälliges Erraten mit hoher Zuverlässigkeit zu verhindern. Die zweiten Identifikationsdaten können auch auf einem Datenträger aufgebracht sein, beispielsweise als Strichcode oder sogenannter QR (Quick Response)-Code auf einem selbstklebenden Etikett aufgedruckt sein oder als elektronische Daten in einem sogenannten Radio Frequency Identification Tag (RF-ID Tag) gespeichert sein.

Die Sicherheit des erfindungsgemäßen Verfahrens ist dadurch erhöht, dass die zweite Identifikationsdaten nicht in dem elektronischen Speicher des Kundenterminals gespeichert sind und für das Betriebssystem des Kundenterminals elektronisch unzugänglich und dadurch nicht veränderbar sind. Insbesondere können die zweiten Identifikationsdaten auf einem an dem Kundenterminal körperlich anbringbaren, beispielsweise aufklebbaren Datenträger gespeichert sein. Es ist auch eine Ausführungsart denkbar, in welcher der Kunde die zweiten Identifikationsdaten in seinem Gedächtnis speichert und mündlich an das Händlerterminal bzw. eine dort tätige Person übermittelt. Alternativ hierzu können die zweiten Identifikationsdaten als Code aufgedruckt sein, der von einem an dem Händlerterminal ohnehin vorhandenen Scanner gescannt werden kann. Eine weitere Alternative stellt ein RF-ID Tag dar oder eine sonstige elektronische Einrichtung, die geeignet ist, eine Nahfeldkommunikation (Near Field Communication, NFC) auszuführen. Wesentlich für die Sicherheit ist dabei, dass die zweiten Identifikationsdaten auf einem von der sonstigen Datenübertragung getrennten Kanal übermittelt werden, insbesondere dass die zweiten Identifikationsdaten für das Kundenterminal unzugänglich sind, insbesondere nicht kopierbar, mithörbar und dergleichen.

Das Händlerterminal verknüpft die Bezahldaten einschließlich des zu bezahlenden Betrages mit den zweiten Identifikationsdaten und überträgt die verknüpften Daten elektronisch von dem Händlerterminal an das Payment Gateway. Das Payment Gateway überprüft durch einen Vergleich der vom Payment Gateway empfangenen zweiten Identifikationsdaten und der in der Kundendatenbank gespeicherten Daten, ob für den Kunden, dem die zweiten Identifikationsdaten in der Kundendatenbank zugeordnet sind, eine Session zur Auslösung eines Bezahlvorgangs gestartet ist und überträgt bejahendenfalls die Bezahldaten, insbesondere den Kaufpreis, auf elektronischem Wege von dem Payment Gateway an das Kundenterminal mit der Aufforderung zur Bestätigung des Bezahlvorgangs.

In einer Ausführungsart bestätigt der Kunde an seinem Kundenterminal den Bezahlvorgang, beispielsweise durch Betätigen einer entsprechenden Taste. Das Kundenterminal überträgt diese Bestätigung auf elektronischem Wege an das Payment Gateway, welches daraufhin ebenfalls auf elektronischem Wege eine Zahlungsbestätigung an das Händlerterminal überträgt, woraufhin die bezahlte Ware oder Dienstleistung von dem Händler dem Kunden überlassen wird. Im Rahmen der Bestätigung des Bezahlverfahrens kann das Kundenterminal auch Integritätsdaten an das Payment Gateway übermitteln, woraufhin das Payment Gateway die empfangene Integritätsdaten mit den entsprechenden in der Kundendatenbank gespeicherten Daten vergleicht und dadurch überprüft, ob das Kundenterminal integer ist, d. h. nicht korrumpiert, und bejahendenfalls das Payment Gateway daraufhin den Bezahlvorgang veranlasst. Beispielsweise kann das Payment Gateway die für eine Überweisung erforderlichen Daten einschließlich Kundenkontodaten und Händlerkontodaten elektronisch an ein entsprechendes Bankensystem übertragen, welches daraufhin einen Überweisungsvorgang in die Wege leitet und den entsprechenden Zahlungsvorgang vorzugsweise unwiderruflich disponiert.

In einer Ausführungsart legt das Händlerterminal, insbesondere zu jenem Zeitpunkt, zu dem die Bezahldaten einschließlich des Kaufpreises ermittelt werden, eine vorzugsweise nur temporär gültige und insbesondere nur einmal verwendbare Transaktionszeichenfolge für den Bezahlvorgang fest und verknüpft diese Transaktionszeichenfolge mit den Bezahldaten und den vom Kunden oder Kundenterminal empfangenen zweiten Identifikationsdaten, und übermittelt die verknüpften Daten an das Payment Gateway auf elektronischem Wege. Die elektronische Übermittlung kann beispielsweise über ein Datennetz, gegebenenfalls auch über das Internet erfolgen.

Das Payment Gateway extrahiert die Transaktionszeichenfolge des Händlers aus den verknüpften Daten und überträgt diese auf elektronischem Wege an das Kundenterminal. An dem Kundenterminal kann die Transaktionszeichenfolge beispielsweise angezeigt werden und von dem Kunden an das Händlerterminal auf einem von der Datenverbindung zwischen dem Kundenterminal und dem Payment Gateway und/oder zwischen dem Händlerterminal und dem Payment Gateway unabhängigen Übertragungsweg und vorzugsweise getrennt von der Laufzeitumgebung des Kundenterminals übermittelt werden. Die Transaktionszeichenfolge kann auch codiert an einem Display des Kundenterminals angezeigt werden, beispielsweise als Strichcode, und das Händlerterminal kann diesen Code scannen.

Das Händlerterminal verifiziert anschließend, ob die vom Kunden oder dem Kundenterminal übermittelte Transaktionszeichenfolge gültig ist, d. h. ob es sich dabei um jene Transaktionszeichenfolge handelt, die vom Händlerterminal für den Bezahlvorgang festgelegt wurde. Bejahendenfalls überträgt das Händlerterminal eine dahingehende Mitteilung an das Payment Gateway. Das Payment Gateway löst daraufhin den bargeldlosen Bezahlvorgang aus, beispielsweise durch einen Verbindungsaufbau mit einem Rechenzentrum einer Bank und der Verfügung einer entsprechenden Buchung.

Das Kundenterminal wird nicht von vornherein als vertrauenswürdig und integer eingeschätzt, weshalb gemäß der vorliegenden Erfindung Integritätsdaten eingesetzt werden, die es dem Payment Gateway erlauben, die Integrität, d. h. die Vertrauenswürdigkeit, des Kundenterminals zu prüfen. Diese Integritätsdaten bilden ein erstes Sicherheitsmerkmal der Erfindung.

Ein weiteres Sicherheitsmerkmal der Erfindung bilden die zweiten Identifikationsdaten, die zur Identifikation des als Käufer gegenüber dem Händler auftretenden Kunden einer Bank dienen und unidirektional und getrennt von der Laufzeitumgebung des Kundenterminals zum Händler übertragen werden. Die Bezahldaten einschließlich des Kaufpreises werden dagegen zu keinem Zeitpunkt zwischen dem Kunden und dem Händler direkt ausgetauscht, sondern sind teilweise nur dem Payment Gateway zugänglich. Das Payment Gateway übernimmt die Steuerung und Durchführung der Bezahltransaktion. Hierzu hat das Payment Gateway als zentrale Einrichtung Zugriff auf die Kundendatenbank und die Händlerdatenbank, in denen die für die Bezahltransaktion notwendigen Daten des Kunden einerseits und des Händlers andererseits gespeichert sind. Anhand der Daten ist es dem Payment Gateway möglich, Bezahltransaktionen zwischen dem Händler und dem Bankkunden durchzuführen bzw. weiterzuleiten, ohne dass der Kunde seine Kundendaten dem Händler bekannt machen muss.

Die zweiten Identifikationsdaten können beispielsweise durch eine zufällig ausgewählte Zeichenfolge gebildet sein, die von dem Payment Gateway festgelegt wurde und an den Kunden bzw. das Kundenterminal ausgeliefert wurde. Die Übermittlung der zweiten Identifikationsdaten von dem Kunden an den Händler erfolgt nicht über die elektronischen Datenübertragungswege, sondern direkt und getrennt von der Laufzeitumgebung des Kundenterminals am Ort des Bezahlvorganges, dem sogenannten Point of Sale (POS). Dadurch wird eine auch hinsichtlich der Sicherheit kritische Datenübertragung vermieden und außerdem der Datenverkehr auf den elektronischen Übertragungswegen reduziert, was insbesondere in Stoßzeiten, wie sie sich beispielsweise in Supermärkten vor Feiertagen einstellen, zu einer erheblichen Beschleunigung des Bezahlvorganges führen.

Die beispielsweise in Supermärkten bereits vorhandenen Händlerterminals müssen für eine Ausführung des Verfahrens lediglich um eine Softwarekomponente ergänzt werden, welche die zweiten Identifikationsdaten mit den Bezahldaten verknüpft und an das Payment Gateway weiterleitet. Zu diesem Zeitpunkt hat der Kunde durch das Starten des durch Zugangsdaten geschützten Anwendungsprogramms zum bargeldlosen Bezahlen an seinem Kundenterminal bei dem Payment Gateway bereits eine Session gestartet und das Payment Gateway wartet auf die Übermittlung von Bezahldaten eines Händlerterminals. Die Session kann dabei nur für eine vorgebbare Zeitdauer von beispielsweise weniger als 20 Sekunden aktiv sein und insbesondere von dem Payment Gateway geschlossen werden, wenn nicht innerhalb einer vorgebbaren Zeitdauer gültige zweite Identifikationsdaten des Kunden über ein Händlerterminal empfangen werden.

Ein weiteres Sicherheitsmerkmal stellen die Zugangsdaten des Anwendungsprogramms zum bargeldlosen Bezahlen am Kundenterminal dar, die im Vorfeld eines Bezahlvorganges beispielsweise vom Payment Gateway an den Kunden bzw. das Kundenterminal emittiert wurden, und mit denen sich der Kunde als zur Teilnahme am bargeldlosen Bezahlverfahren autorisiert identifiziert. In einer Ausführungsart kann allein das Payment Gateway die Identifikation des Kunden, des schwebenden Zustands und der Bezahldaten und der Händlerdaten zur Validierung bringen und eine Bezahltransaktion auslösen.

Ein weiterer Vorteil des erfindungsgemäßen Verfahrens besteht darin, dass an dem Händlerterminal keine zusätzlichen Hardwarekomponenten erforderlich sind. So können beispielsweise die bei Kassensystemen bisher vorhandenen Bezahlterminals (Point of Sale-POS-Terminals) entfallen. Das Verfahren beschleunigt den Bezahlvorgang und ist sehr sicher, da keine Bezahldaten zwischen dem Kunden und dem Händler direkt und unverschlüsselt ausgetauscht werden.

In einer Ausführungsart startet das Payment Gateway den Bezahlvorgang nur nach positiver Überprüfung der Integritätsdaten, d. h. nach Feststellen eines nicht korrumpierten Kundenterminals. Hierzu werden die aktuell empfangenen Integritätsdaten mit jenen Integritätsdaten verglichen, die ursprünglich, beispielsweise im Rahmen einer Registrierung des Kundenterminals zur Teilnahme am Verfahren zum bargeldlosen Bezahlen, festgestellt wurden. Hierzu kann das Payment Gateway im Rahmen des Registrierungsverfahrens eine Software auf dem Kundenterminal aufspielen, welche hinsichtlich der Integrität des Kundenterminals repräsentative Attribute prüft und an das Payment Gateway überträgt, beispielsweise die Hardwareausrüstung einschließlich Prozessor und Speicher, oder die Softwareausrüstung einschließlich Betriebssystem und Anwendungssoftware des Kundenterminals.

In einer Ausführungsart weist jede elektronische Übertragung von Daten von dem Kundenterminal auf das Payment Gateway Integritätsdaten auf, anhand denen das Payment Gateway überprüfen kann, ob das Kundenterminal noch integer ist oder bereits durch eine Schadsoftware korrumpiert wurde.

Die Erfindung betrifft auch ein Verfahren zur Geldausgabe an einem Geldausgabeautomaten mit einem mobilen Kundenterminal wie im nebengeordneten Anspruch bestimmt, das insofern auch ein Verfahren zum bargeldlosen Bezahlen ist, bei dem das Händlerterminal ein Geldausgabeautomat ist und die durch Kontobelastung zu bezahlende Ware Geldscheine sind.

Unterschiedlich kann das am Kundenterminal zu startende Anwendungsprogramm oder die Anwendungsapplikation sein, beispielsweise "mobil Bezahlen" einerseits und "mobil Geld ausbezahlen" andererseits. Der Softwareanker zur Prüfung von Integritätsdaten ist in beiden Anwendungen vorhanden ebenso wie der Umstand, dass das Anwendungsprogramm einen schwebenden Zustand bzw. eine Session auslöst. Der Kasse beim Bezahlvorgang entspricht der Geldausgabeautomat beim Geldabhebevorgang. Das beispielsweise Scannen der zweiten Identifikationsdaten beim Bezahlvorgang entspricht der Eingabe eines statischen Codes (entsprechend dem Barcode beim Bezahlen) zusammen mit einem dynamischen Codes bzw. einer Transaktionsidentifikationszeichenfolge, der beim Geldabhebevorgang über die Verbindung des Payment Gateway zum Kundenterminal gesendet wird. Beim Bezahlen kann die Ware von einer Scannerkasse des Händlerterminals erfasst werden und der zu zahlende Betrag ermittelt werden. Beim Geldabheben bestimmt der Kunde den Betrag durch Eingabe am Kundenterminal. Beim Bezahlen kann der Kunde die Zahlung am Kundenterminal bestätigen oder auch am Händlerterminal. Beim Geldabheben bestätigt der Kunde am Geldausgabeautomaten entsprechend dem Händlerterminal.

Die Erfindung betrifft auch ein System zum Durchführen eines Verfahrens wie vorstehend beschrieben, wobei das System ein mobiles Kundenterminal, ein Händlerterminal oder einen Geldausgabeautomaten sowie ein den Bezahlvorgang steuerndes Payment Gateway umfasst. Das System umfasst weiterhin eine dem Payment Gateway elektronisch zugänglich Kundendatenbank, in welche im Rahmen der Registrierung des Kundenterminals übertragene Integritätsdaten des Kundenterminals gespeichert sind. Für das Payment Gateway ist anhand eines Vergleiches von vom Kundenterminal während eines Bezahlvorgangs oder Geldabhebevorgangs übertragenen Integritätsdaten mit den in der Kundendatenbank gespeicherten Integritätsdaten überprüfbar, ob das Kundenterminal noch integer ist oder bereits durch eine Schadsoftware korrumpiert ist.

Weitere Vorteile, Merkmale und Einzelheiten der Erfindung ergeben sich aus den Unteransprüchen und der nachfolgenden Beschreibung, in der unter Bezugnahme auf die Zeichnungen mehrere Ausführungsbeispiele im Einzelnen beschrieben sind. Dabei können die in den Ansprüchen und in der Beschreibung erwähnten Merkmale jeweils einzeln für sich oder in beliebiger Kombination erfindungswesentlich sein.
- Fig. 1: zeigt schematisch die Architektur eines Ausführungsbeispiels eines erfindungsgemäßen Systems,
- Fig. 2: zeigt schematisiert das Emittieren bzw. Verankern von Sicherheitsmerkmalen des erfindungsgemäßen Verfahrens,
- Fig. 3: zeigt den Ablauf eines ersten Ausführungsbeispiels des erfindungsgemäßen Verfahrens,
- Fig. 4: zeigt ein Datentelegramm des erstens Ausführungsbeispiels,
- Fig. 5: zeigt den Ablauf eines zweiten Ausführungsbeispiels,
- Fig. 6: zeigt ein Datentelegramm des zweiten Ausführungsbeispiels, und
- Fig. 7: den Ablauf eines weiteren Ausführungsbeispiels des erfindungsgemäßen Verfahrens, nämlich den Ablauf eines Verfahrens zur Geldausgabe an einem Geldausgabeautomaten.

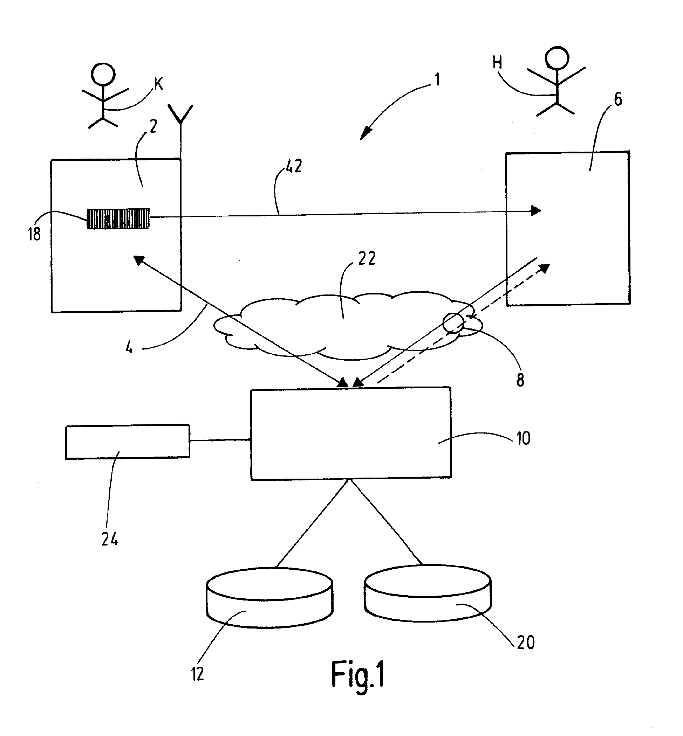

Die Fig. 1 zeigt schematisch die Architektur eines Ausführungsbeispiels eines erfindungsgemäßen Systems 1 zum Durchführen eines erfindungsgemäßen Verfahrens zum bargeldlosen Bezahlen. Das System 1 umfasst ein mobiles Kundenterminal 2, bei dem es sich um ein Smartphone handeln kann. Das Kundenterminal 2 kann mit einem den bargeldlosen Bezahlvorgang steuernden Payment Gateway 10 als zentrale Einrichtung des Systems 1 eine vorzugsweise drahtlose Datenverbindung 4 über ein Datennetz 22 aufbauen. Das System 1 umfasst weiterhin ein Händlerterminal 6, das mit dem Payment Gateway 10 eine im Ausführungsbeispiel drahtgebundene Datenverbindung 8 über das Datennetz 22 aufbauen kann. Es ist auch eine drahtlose Datenverbindung zwischen Händlerterminal 6 und Payment Gateway 10 möglich. Das Händlerterminal 6 kann ein stationäres Terminal sein, beispielsweise eine Registrierkasse in einem Supermarkt, oder kann ein mobiles Terminal sein, und beispielsweise in einem Fahrzeug installiert sein.

Das Payment Gateway 10 hat Zugriff auf eine Kundendatenbank 12, in welcher Daten eines Bankkontos des Kunden K gespeichert sind, dem das Kundenterminal 2 zugeordnet ist, beispielsweise die Bankleitzahl oder die Kontonummer eines Bankkontos des Kunden K. Darüber hinaus sind in der Kundendatenbank 12 auch erste Identifikationsdaten 14 des Kunden K gespeichert, die beispielsweise neben persönlichen Daten oder spezifischen Daten des Kundenterminals 2 auch die Zugangsdaten 26 für ein Anwendungsprogramm auf dem Kundenterminal 2 umfassen können, mittels dem das bargeldlose Bezahlen initiiert wird, oder die in einer alternativen Ausführungsart ausschließlich durch diese Zugangsdaten 26 gebildet sind.

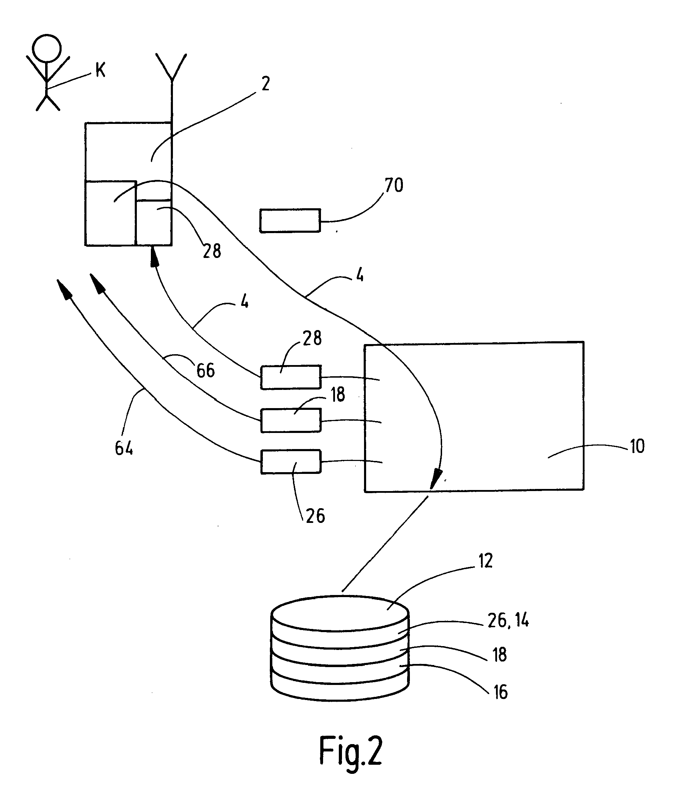

Darüber hinaus sind in der Kundendatenbank 12 Integritätsdaten 16 (Fig. 2) des Kundenterminals 2 gespeichert, beispielsweise Daten zu der Hardwareausstattung und/oder dem Softwarestand des Kundenterminals 2. Weiterhin sind in der Kundendatenbank 12 auch zweite Identifikationsdaten 18 des dem Kundenterminal 2 zugeordneten Kunden K gespeichert, mittels denen sich der Kunde bzw. das Kundenterminal 2 im Verlauf eines Bezahlvorgangs gegenüber dem Händlerterminal 6 identifizieren kann. Diese zweiten Identifikationsdaten 18 können ursprünglich von dem Payment Gateway 10 an den Kunden K bzw. das Kundenterminal 2 ausgegeben worden sein und insbesondere von dem Payment Gateway 10 festgelegt worden sein.

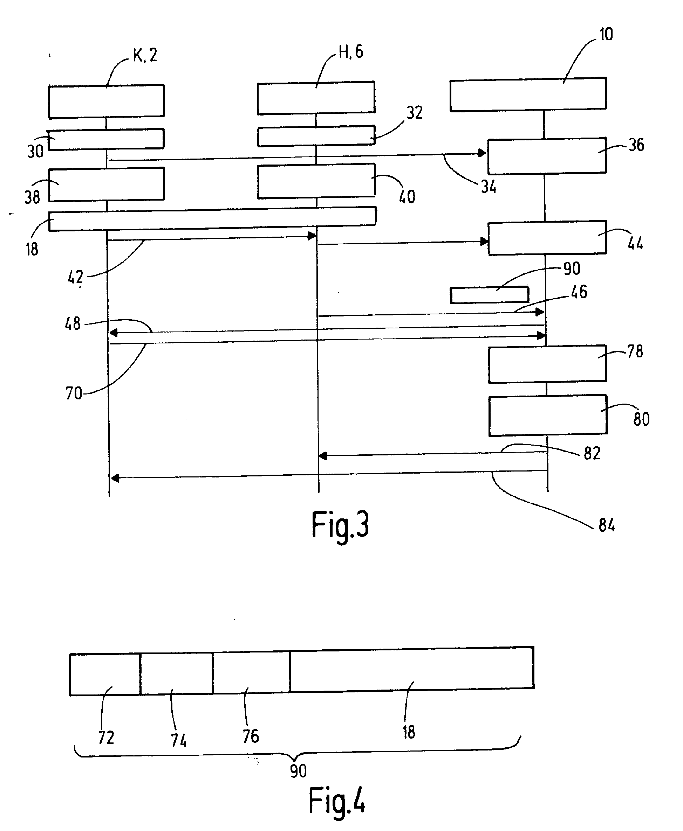

Das Payment Gateway 10 hat auch Zugriff auf eine Händlerdatenbank 20, in welcher Händleridentifikationsdaten 72 (Fig. 4) gespeichert sein können sowie Kontodaten eines Bankkontos des Händlers H einschließlich Bankleitzahl und Kontonummer.

Das Payment Gateway 10 ist datentechnisch mit dem Rechenzentrum 24 einer Bank verbunden oder kann auch in dem Rechenzentrum 24 integriert sein. Im Rahmen des Ausführungsbeispiels wird davon ausgegangen, dass das Payment Gateway 10 nicht korrumpierbar ist, insbesondere durch geeignete und aufwändige Sicherheitsmaßnahmen vor einem Hackerangriff geschützt ist. Auch die Daten in der Kundendatenbank 12 werden als sicher und nicht manipulierbar erachtet, insbesondere kann nur das Payment Gateway 10 auf die Daten der Kundendatenbank 12 zugreifen.

Die Fig. 2 zeigt schematisiert das Emittieren bzw. Verankern von Sicherheitsmerkmalen des erfindungsgemäßen Verfahrens an den Kunden K und/oder das Kundenterminal 2. So emittiert das Payment Gateway 10 zeitlich gegebenenfalls auch lange, d.h. Tage, Wochen oder Monate, vor dem Durchführen des Bezahlverfahrens Zugangsdaten 26 für die Teilnahme des Kunden K bzw. des Kundenterminals 2 an dem erfindungsgemäßen Verfahren, beispielsweise im Rahmen eines vorgeschalteten Registrierungsverfahrens. Auch die Händler H sind für die Teilnahme an dem Verfahren registriert.

Bei den Zugangsdaten 26 kann es sich beispielsweise um einen sogenannten VR-Netkey handeln, wie er von den deutschen Volks- und Raiffeisenbanken den Kunden für einen Zugang zum Onlinebanking zur Verfügung gestellt wird. Die Zugangsdaten 26 können Daten eines Bankkontos und ein Zugangs-Kennwort umfassen, oder beides kombiniert in einem Alias, der in einer Ausführungsart auch vom Kunden K selbst bestimmt werden kann. Die Zugangsdaten 26 werden auf einem von der Datenverbindung 8 unabhängigen Zugangsweg 64 emittiert, beispielsweise auch per Briefpost. Die Zugangsdaten 26 sind in der Kundendatenbank 12 gespeichert.

Das Payment Gateway 10 emittiert weiterhin an den Kunden K bzw. das Kundenterminal 2 zweite Identifikationsdaten 18, beispielsweise eine zufällig ausgewählte Zeichenfolge, beispielsweise auch in Form eines Strichcodes oder QR-Codes, oder in Form eines RF-ID Tags. Der Kunde K kann die zweiten Identifikationsdaten 18 an seinem Kundenterminal 2 anbringen, beispielsweise einen Barcode-Aufkleber oder ein RF-ID Tag-Bauelement auf das Kundenterminal 2 festlegen. Die zweiten Identifikationsdaten 18 werden auf einem von der Datenverbindung 8 unabhängigen Zugangsweg 66 emittiert, beispielsweise auch per Briefpost, in einer Ausführungsart auch zusammen mit den Zugangsdaten 26. Die zweiten Identifikationsdaten 18 sind in der Kundendatenbank 12 gespeichert.

Das Payment Gateway 10 emittiert weiterhin einen Softwareanker 28 an das Kundenterminal 2, mit dessen Hilfe beim späteren Ablauf des Bezahlverfahrens die Integritätsdaten 16 des Kundenterminals 2 an das Payment Gateway 10 übertragen werden. Hierzu wird elektronisch über die Datenverbindung 8 zunächst ein Ankerprogramm auf dem Kundenterminal 2 als ein dem Kunden K vorzugsweise unzugängliches Anwendungsprogramm installiert, das unmittelbar anschließend und vorzugsweise noch im Rahmen des Registrierungsverfahrens ebenfalls elektronisch über die Datenverbindung 8 Integritätsdaten 16 an das Payment Gateway 10 überträgt, die in der Kundendatenbank 12 gespeichert werden. Die Installation des Ankerprogramms kann mittels einer Identifikationszeichenfolge und einer Transaktionszeichenfolge gesichert sein, beispielsweise mittels der PIN und einer TAN, wie sie vom Kunden K auch im Onlinebanking verwendet werden. Die Installation des Ankerprogramms kann gleichzeitig mit der Installation des Anwendungsprogramms oder der Anwendungsapplikation für das mobile Bezahlen erfolgen. Bei den Integritätsdaten 16 kann es sich beispielsweise um Attribute des Kundenterminals 2 handeln, etwa die Hardwareausstattung einschließlich Prozessortyp und Speichergröße und/oder der Softwarestand.

Der Softwareanker 28 gewährleistet einen nicht manipulierbaren Datenaustausch zwischen dem Payment Gateway 10 und dem Kundenterminal 2. Das Ankerprogramm ist dabei keine eigenständig lauffähige Anwendungsapplikation für das Kundenterminal, sondern wird im Rahmen einer Entwicklungsumgebung (SDK, Software Development Kit) dem Entwickler der Anwendungsapplikation für das mobile Bezahlen zur Verfügung gestellt und kann über Funktionsaufrufe in die Anwendungsapplikation integriert werden. Entsprechende Produkte können beispielsweise unter der Bezeichnung AST (Application Security Technologie) bei der KOBIL Systems GmbH in D-67547 Worms bezogen werden.

Die Fig. 3 zeigt den Ablauf eines ersten Ausführungsbeispiels des erfindungsgemäßen Verfahrens. Der Kunde K wählt in einem Verfahrensschritt 30 zunächst gegebenenfalls anhand seines Kundenterminals 2 die zu kaufenden Waren und/oder Dienstleistungen aus. In einem Supermarkt legt der Kunde K beispielsweise die zugehörigen Waren an der Kasse des Händlers H vor. Es sind jedoch auch andere Kauf-und Bezahlvorgänge denkbar, beispielsweise an einem Datenterminal, an dem Dienstleistungen bezahlt werden oder herunterladbare Daten wie Musikdateien.

Der Händler H erfasst in einem Verfahrensschritt 32 mit seinem Händlerterminal 6 die zu kaufenden Waren oder Dienstleistungen, beispielsweise kann in einem Supermarkt das Händlerterminal 6 die auf den Waren befindlichen Etiketten mit einem Scanner erfassen.

Der Kunde K startet daraufhin an seinem Kundenterminal 2 durch Eingabe der Zugangsdaten 26 das dort gespeicherte Anwendungsprogramm und aktiviert in dem Anwendungsprogramm die Bezahlfunktion 38. Das Kundenterminal 2 baut in einem Verfahrensschritt 36 eine Verbindung 34 mit dem Payment Gateway 10 auf und sendet im Rahmen dieser Verbindung 34 erste Identifikationsdaten 14 einschließlich Integritätsdaten 16 des Kundenterminals 2 an das Payment Gateway 10. Das Payment Gateway 10 überprüft durch Vergleich der aktuell empfangenen Integritätsdaten 16 mit den in der Kundendatenbank 12 gespeicherten Integritätsdaten 16, ob das Kundenterminal 2 integer oder beispielsweise durch eine Schadsoftware korrumpiert ist. Wenn die Integrität des Kundenterminals 2 festgestellt wird, startet das Payment Gateway 10 eine Session für einen bargeldlosen Bezahlvorgang mit dem anhand der ersten Identifikationsdaten 14 identifizierten Kunden K.

Der Händler H aktiviert in einem Verfahrensschritt 40 in seinem Händlerterminal 6 die Bezahlart "mobiles Bezahlen". Daraufhin erwartet das Händlerterminal 6 in einem Verfahrensschritt 42 die Übermittlung der zweiten Identifikationsdaten 18 auf einem von den Datenverbindungen 4, 8 zwischen dem Kundenterminal 2 und dem Payment Gateway 10 und/oder zwischen dem Händlerterminal 6 und dem Payment Gateway 10 unabhängigen Übertragungsweg, beispielsweise indem das Händlerterminal 6 die als Barcode auf der Rückseite des Kundenterminals 2 aufgeklebten zweiten Identifikationsdaten 18 scannt oder die in einem RF-ID Tag an oder in dem Kundenterminal 2 gespeicherten zweiten Identifikationsdaten 18 ausliest.

Das Händlerterminal 6 baut in einem Verfahrensschritt 44 eine Datenverbindung 8 mit dem Payment Gateway 10 auf und verknüpft nun Bezahldaten, die beispielsweise eine Händleridentifikation und/oder eine Händlerterminalidentifikation 72, das Datum und/oder die Uhrzeit 74 sowie den Betrag 76 umfassen, mit den empfangenen zweiten Identifikationsdaten 18 und überträgt diese auf elektronischem Wege 46 im Rahmen eines in der Fig. 4 dargestellten Datentelegramms 90 an das Payment Gateway 10.

Das Payment Gateway 10 überprüft durch einen Vergleich der empfangenen zweiten Identifikationsdaten 18 mit den entsprechenden in der Kundendatenbank 12 gespeicherten Daten zunächst, ob für den zugehörigen Kunden K eine Session zur Auslösung eines Bezahlvorgangs gestartet ist. Bejahendenfalls ermittelt das Payment Gateway 10 aus den in der Kundendatenbank 12 gespeicherten Daten die Sendeadresse für das Kundenterminal 10 und überträgt in einem Verfahrensschritt 48 einen Teil der Daten des Datentelegramms 90, insbesondere die Identitätsdaten 72 des Händlers H und den zu zahlenden Betrag 76, zusammen mit einer Aufforderung zur Bestätigung des Bezahlvorgangs an das Kundenterminal 2. Die Händlerangabe kann dabei anhand der in der Händlerdatenbank 20 gespeicherten Daten in für den Kunden K verständlicher Form, insbesondere in uncodiertem Klartext, an das Kundenterminal 2 übertragen werden.

Der Kunde K kann auf einem Display seines Kundenterminals 2 die entsprechende Aufforderung des Payment Gateway 10 ablesen und in einem Verfahrensschritt 70 durch Betätigen einer Taste den Bezahlvorgang bestätigen. Das Payment Gateway 10 validiert daraufhin in einem Verfahrensschritt 78 alle Merkmale zur Zahlungsbestätigung, insbesondere kann das Payment Gateway 10 noch einmal Integritätsdaten 16 prüfen, die gegebenenfalls auch zusammen mit der Bestätigung 70 von dem Kundenterminal 2 an das Payment Gateway 10 übertragen werden.

Wenn das Payment Gateway 10 feststellt, dass alle Daten gültig sind, leitet es die für eine Überweisung erforderlichen Daten, einschließlich der Kontodaten des Kunden K aus der Kundendatenbank 12 und der Kontodaten des Händlers H aus der Händlerdatenbank 20, in einem Verfahrensschritt 80 an ein Bankensystem 50 weiter, insbesondere an das Rechenzentrum 24 der Bank. Außerdem sendet das Payment Gateway 10 eine Bestätigung über den disponierten Bezahlvorgang in einem Verfahrensschritt 82 an das Händlerterminal 6 und in einem Verfahrensschritt 84 an das Kundenterminal 2.

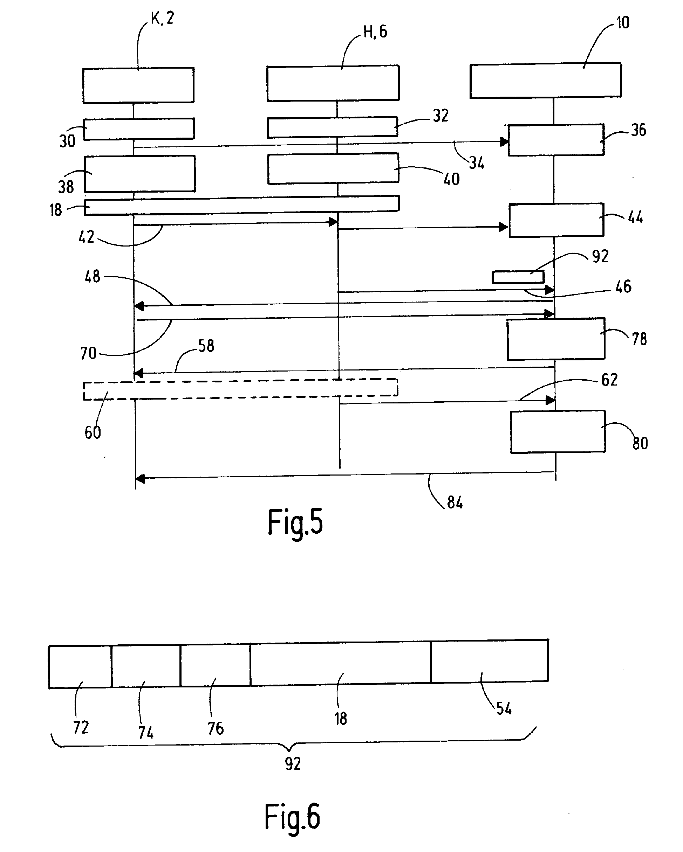

Die Fig. 5 zeigt den Ablauf eines zweiten Ausführungsbeispiels des erfindungsgemäßen Verfahrens. Im Unterschied zum ersten Ausführungsbeispiel der Fig. 3 legt das Händlerterminal 6 beispielsweise im Rahmen des Verfahrensschrittes 44 (Aufbau einer Datenverbindung 8 mit dem Payment Gateway 10) eine Transaktionszeichenfolge 54 fest, beispielsweise durch einen vorgegebenen und im Händlerterminal 20 auszuführenden Algorithmus.

Das Händlerterminal 6 verknüpft nun die Bezahldaten, beispielsweise die Händleridentifikation und/oder die Händlerterminalidentifikation 72, das Datum und/oder die Uhrzeit 74, den Betrag 76, usw., mit den empfangenen zweiten Identifikationsdaten 18 und der Transaktionszeichenfolge 54 und überträgt diese auf elektronischem Wege 46 beispielsweise anhand eines in der Fig. 6 dargestellten Datentelegramms 92 an das Payment Gateway 10.

Das Payment Gateway 10 überprüft durch einen Vergleich der empfangenen zweiten Identifikationsdaten 18 mit den entsprechenden in der Kundendatenbank 12 gespeicherten Daten zunächst, ob für den zugehörigen Kunden K eine Session zur Auslösung eines Bezahlvorgangs gestartet ist. Bejahendenfalls ermittelt das Payment Gateway 10 aus den in der Kundendatenbank 12 gespeicherten Daten die Adresse des Kundenterminals 10 und überträgt in einem Verfahrensschritt 48 einen Teil der Daten des Datentelegramms 90, insbesondere die Identitätsdaten 72 des Händlers H und den zu zahlenden Betrag 76, zusammen mit einer Aufforderung zur Bestätigung des Bezahlvorgangs. Die Händlerangabe kann dabei anhand der in der Händlerdatenbank 20 gespeicherten Daten in für den Kunden K verständlicher Form, insbesondere in uncodiertem Klartext, an das Kundenterminal 2 übertragen und dort angezeigt werden.

Der Kunde K kann auf einem Display seines Kundenterminals 2 die entsprechende Aufforderung des Payment Gateway 10 ablesen und in einem Verfahrensschritt 70 durch Betätigen einer Taste den Bezahlvorgang bestätigen. Das Payment Gateway 10 validiert daraufhin in einem Verfahrensschritt 78 alle Merkmale zur Zahlungsbestätigung, insbesondere kann das Payment Gateway 10 noch einmal Integritätsdaten 16 prüfen, die gegebenenfalls auch zusammen mit der Bestätigung 70 von dem Kundenterminal 2 an das Payment Gateway 10 übertragen werden.

Wenn das Payment Gateway 10 feststellt, dass alle Daten gültig sind, übermittelt es in einem Verfahrensschritt 58 die Transaktionszeichenfolge 54 durch elektronische Datenübertragung an das Kundenterminal 2. Durch eine unidirektionale Übermittlung der Transaktionszeichenfolge 54 von dem Kundenterminal 2 an das Händlerterminal 6 erhält das Händlerterminal 6 die Transaktionszeichenfolge 54 von dem Kundenterminal 2 auf einem nicht zwangsläufig elektronischen Übertragungsweg 60. Beispielsweise kann die Transaktionszeichenfolge 54 vom Kunden K abgelesen werden und dem Händler H mitgeteilt werden, oder in das Händlerterminal 6 eingegeben werden. Alternativ hierzu kann die Transaktionszeichenfolge 54 auch als Klartext oder codiert, beispielsweise als Strichcode, auf dem Display des Kundenterminals 2 angezeigt werden und vom Händlerterminal 6 gescannt werden.

Das Händlerterminal 6 überprüft die Transaktionszeichenfolge 54 und sendet gegebenenfalls eine Bestätigung 62 an das Payment Gateway 10, welches daraufhin die relevanten Zahlungsdaten in einem Verfahrensschritt 80 an ein Bankensystem 50 weiterleitet und abschließend in einem Verfahrensschritt 84 auf elektronischem Wege eine Bestätigung über den disponierten Bezahlvorgang an das Kundenterminal 2 sendet.

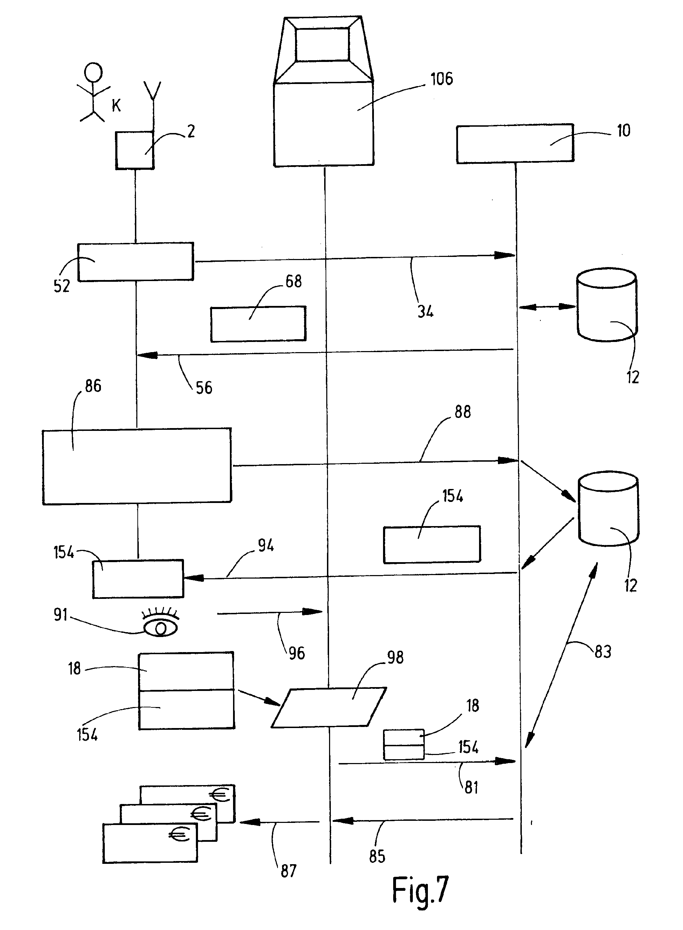

Die Fig. 7 zeigt den Ablauf eines weiteren Ausführungsbeispiels des erfindungsgemäßen Verfahrens, nämlich den Ablauf eines Verfahrens zur Geldausgabe an einem Geldausgabeautomaten 106. Hinsichtlich des Emittierens bzw. Verankerns von Sicherheitsmerkmalen gilt das vorstehend zur Fig. 2 beschriebene. Zum Durchführen einer Geldausgabe an dem Geldausgabeautomaten 106 startet der Kunde K zunächst an seinem Kundenterminal 2 die Anwendung "mobiles Auszahlen" und gibt hierzu die Zugangsdaten 26 ein, insbesondere den sogenannten VR-Netkey.
Diese Daten werden an das Payment Gateway 10 übertragen 34, wobei gleichzeitig Integritätsdaten 16 des Kundenterminals 2 an das Payment Gateway 10 übertragen werden. Das Payment Gateway 10 überprüft durch Vergleich der aktuell empfangenen Integritätsdaten 16 mit den in der Kundendatenbank 12 gespeicherten Integritätsdaten 16, ob das Kundenterminal 2 integer oder beispielsweise durch eine Schadsoftware korrumpiert ist.

Wenn die Integrität des Kundenterminals 2 festgestellt wird, startet das Payment Gateway 10 eine Session für einen Geldausgabevorgang.
Das Payment Gateway 10 überträgt elektronisch 56 die dem Kunden K zur Verfügung stehenden Konten und bitten den Kunden K um seine diesbezügliche Auswahl. Die Kontenauswahl 68 wird auf einem Display des Kundenterminals 2 angezeigt und dabei auch der auszuzahlende Betrag abgefragt, der von dem Kunden K an dem Kundenterminal 2 eingegeben wird. Anschließend werden die Kontendaten und der Auszahlungsbetrag 86 an das Payment Gateway 10 elektronisch übermittelt 88.

Das Payment Gateway 10 ordnet dem Geldausgabevorgang eine vorzugsweise nur einmal verwendbare und insbesondere nur zeitlich befristet, beispielsweise weniger als 60 Sek., gültige
Transaktionsidentifikationszeichenfolge 154 zu und überträgt elektronisch 94 die Transaktionsidentifikationszeichenfolge 154 an das Kundenterminal 2, wo diese auf dem Display des Kundenterminals 2 angezeigt wird und vom Kunden K ablesbar 91 ist oder auf sonstige Weise dem Kunden K übermittelt wird.

Der Kunde K wählt an dem von ihm ausgewählten Geldausgabeautomaten 106, beispielsweise an einem dortigen Startbildschirm, die Funktion "mobiles Auszahlen" aus 96. Daraufhin wird der Kunde K aufgefordert, ihm zugeordnete zweite Identifikationsdaten 18, beispielsweise eine persönliche und vorzugsweise dauerhaft gültige Transaktionsidentifikationszeichenfolge, sowie die nur temporär gültige und dem Auszahlungsvorgang zugeordnete Identifikationszeichenfolge 154 an dem Geldausgabeautomaten einzugeben, beispielsweise mittels einer dort angeordneten Tastatur 98.

Der Geldausgabeautomat 106 sendet 81 daraufhin die zweiten Identifikationsdaten 18 sowie die Transaktionsidentifikationszeichenfolge 154 an das Payment Gateway 10, welches diese Daten anhand der in der Kundendatenbank 12 gespeicherten Daten überprüft 83.

Wenn das Payment Gateway 10 durch Vergleichen der am Geldausgabeautomaten 106 eingegeben zweiten Identifikationsdaten 18 und der Transaktionsidentifikationszeichenfolge 154 mit den entsprechenden in der Kundendatenbank 12 gespeicherten Daten feststellt, dass für den Kunden, dem die zweiten Identifikationsdaten 18 zugeordnet sind, eine Session zur Auslösung eines Geldausgabevorgangs gestartet ist und die Transaktionsidentifikationszeichenfolge 154 gültig ist, sendet das Payment Gateway 10 eine entsprechende Mitteilung 85 an den Geldausgabeautomaten 106. Dabei kann das Payment Gateway 10 anhand der Transaktionsidentifikationszeichenfolge 154 auch den auszuzahlenden Geldbetrag feststellen und an den Geldausgabeautomaten 106 elektronisch übermitteln.

Der Geldausgabeautomat 106 zahlt daraufhin den vom Payment Gateway 10 mitgeteilten Geldbetrag an den Kunden K aus. Das Payment Gateway 10 kann die dem ausbezahlten Geldbetrag 87 entsprechende Belastung des vom Kunden K gewählten Kontos bereits dann belasten, wenn das Payment Gateway 10 eine entsprechende Auszahlungsanweisung an den Geldausgabeautomaten 106 elektronisch übermittelt hat. Alternativ hierzu kann die Kontobelastung auch erst nach einer entsprechenden Rückmeldung des Geldausgabeautomaten 106, dass der auszuzahlende Geldbetrag tatsächlich entnommen wurde, an das Payment Gateway 10 erfolgen.

## Patentansprüche

1. Verfahren zum bargeldlosen Bezahlen mit einem mobilen Kundenterminal (2), beispielsweise einem Smartphone, das mit einem den bargeldlosen Bezahlvorgang steuernden Payment Gateway (10) eine vorzugsweise drahtlose Datenverbindung (4) aufbauen kann, und mit einem Händlerterminal (6), das mit dem Payment Gateway (10) eine Datenverbindung (8) aufbauen kann, wobei das Kundenterminal (2) in einer dem Payment Gateway (10) zugänglichen Kundendatenbank (12) registriert ist und in der Kundendatenbank (12) erste Identifikationsdaten (14) des Kunden (K) oder des Kundenterminals (2), Integritätsdaten (16) des Kundenterminals (2) sowie zweite Identifikationsdaten (18) des Kunden (K) oder des Kundenterminals (2) gespeichert sind, und wobei das Verfahren die folgenden Schritte aufweist:
• Starten eines durch Zugangsdaten (26) geschützten Anwendungsprogramms zum bargeldlosen Bezahlen am Kundenterminal (2), und Aufbauen einer Datenverbindung (4) zwischen dem Kundenterminal (2) und dem Payment Gateway (10),
• elektronisches Übertragen der ersten Identifikationsdaten (14) einschließlich der Zugangsdaten (26) des Anwendungsprogramms und der Integritätsdaten (16) von dem Kundenterminal (2) an das Payment Gateway (10),
• Überprüfen, durch Vergleichen der vom Payment Gateway (10) empfangenen ersten Identifikationsdaten (14) und Integritätsdaten (16) mit den entsprechenden in der Kundendatenbank (12) gespeicherten Daten, ob das Kundenterminal (2) zur Teilnahme am Verfahren zugelassen ist und integer ist, und bejahendenfalls Starten einer Session zur Auslösung eines Bezahlvorgangs,
• Ermitteln der Bezahldaten (72, 74, 76) einschließlich des Kaufpreises (76) vorzugsweise durch das Händlerterminal (6) oder durch Eingabe am Kundenterminal (2), und
• Übermitteln, auf einem von der Datenverbindung (4, 8) zwischen dem Kundenterminal (2) und dem Payment Gateway (10) und/oder zwischen dem Händlerterminal (6) und dem Payment Gateway (10) unabhängigen Übertragungsweg und unabhängig von der Laufzeitumgebung des Kundenterminals (2), der zweiten Identifikationsdaten (18) von dem Kunden (K) oder dem Kundenterminal (2) auf das Händlerterminal (6).

2. Verfahren nach Anspruch 1, weiterhin aufweisend die Schritte:
• Verknüpfen von Bezahldaten (72, 74, 76) einschließlich des zu bezahlenden Betrages (76) und der zweiten Identifikationsdaten (18), und elektronisches Übertragen der verknüpften Daten von dem Händlerterminal (6) an das Payment Gateway (10), und
• Überprüfen, durch Vergleichen der vom Payment Gateway (10) empfangenen zweiten Identifikationsdaten (18) und der in der Kundendatenbank (12) gespeicherten Daten, ob für den Kunden (K), dem die zweiten Identifikationsdaten (18) zugeordnet sind, eine Session zur Auslösung eines Bezahlvorgangs gestartet ist, und bejahendenfalls elektronisches Übertragen der Bezahldaten (72, 74, 76) von dem Payment Gateway (10) an das Kundenterminal (2) mit der Aufforderung zur Bestätigung des Bezahlvorgangs.

3. Verfahren nach Anspruch 1 oder 2, weiterhin aufweisend die Schritte:
• elektronisches Übertragen der Bestätigung des Bezahlvorgangs einschließlich der Integritätsdaten (16) von dem Kundenterminal (2) an das Payment Gateway (10),
• Überprüfen durch Vergleichen der vom Payment Gateway (10) empfangenen Integritätsdaten (16) mit den entsprechenden in der Kundendatenbank (12) gespeicherten Daten, ob das Kundenterminal (2) integer ist, und bejahendenfalls Veranlassen des Bezahlvorganges, und
• elektronisches Übertragen einer Zahlungsbestätigung von dem Payment Gateway (10) an das Händlerterminal (6).

4. Verfahren nach einem der Ansprüche 1 bis 3, **dadurch gekennzeichnet,**
• **dass** das Händlerterminal (6) eine nur temporär gültige Transaktionszeichenfolge (54) für den Bezahlvorgang festlegt,
• **dass** das Händlerterminal (6) die Transaktionszeichenfolge (54) mit den Bezahldaten (72, 74, 76) und den zweiten Identifikationsdaten (18) verknüpft, und die verknüpften Daten an das Payment Gateway (10) elektronisch übermittelt,
• **dass** das Payment Gateway (10) die Transaktionszeichenfolge (54) des Händlers (H) an das Kundenterminal (2) elektronisch überträgt,
• **dass** die Transaktionszeichenfolge (54) des Händlers (H) von dem Kunden (K) oder dem Kundenterminal (2) an das Händlerterminal (6) auf einem von der Datenverbindung (4, 8) zwischen dem Kundenterminal (2) und dem Payment Gateway (10) und/oder zwischen dem Händlerterminal (6) und dem Payment Gateway (10) unabhängigen Übertragungsweg und unabhängig von der Laufzeitumgebung des Kundenterminals (2) übermittelt wird,
• **dass** das Händlerterminal (6) verifiziert, ob die vom Kunden (K) oder dem Kundenterminal (2) übermittelte Transaktionszeichenfolge (54) des Händlers gültig ist, und bejahendenfalls Übertragen einer Mitteilung vom Händlerterminal (6) an das Payment Gateway (10) betreffend die verifizierte Transaktionszeichenfolge (54), und
• Auslösen des bargeldlosen Bezahlvorgangs durch das Payment Gateway (10), beispielsweise durch Verbindungsaufbau mit einem Rechenzentrum (24) einer Bank, und Verfügung einer entsprechenden Buchung.

5. Verfahren nach einem der Ansprüche 1 bis 4, **dadurch gekennzeichnet, dass** im Rahmen der Registrierung des Kundenterminals (2) die zweiten Identifikationsdaten (18) an den Kunden (K) oder das Kundenterminal (2) auf einem von der Datenverbindung (4) zwischen dem Kundenterminal (2) und dem Payment Gateway (10) unabhängigen Übertragungsweg übermittelt werden.

6. Verfahren nach Anspruch 5, **dadurch gekennzeichnet, dass** die zweiten Identifikationsdaten (18) für das Betriebssystem des Kundenterminals (2) elektronisch unzugänglich auf einem Datenträger aufgebracht sind, insbesondere auf einem an dem Kundenterminal (2) körperlich anbringbaren Datenträger.

7. Verfahren nach einem der Ansprüche 1 bis 6, **dadurch gekennzeichnet, dass** im Rahmen der Registrierung des Kundenterminals (2) ein Anwendungsprogramm (28) auf dem Kundenterminal (2) gespeichert wird, das beim Starten des Anwendungsprogramms zum bargeldlosen Bezahlen und/oder auf Anfrage des Payment Gateway (10) Integritätsdaten (16) des Kundenterminals (2) an das Payment Gateway (10) überträgt.

8. Verfahren nach Anspruch 7, **dadurch gekennzeichnet, dass** die Integritätsdaten (16) Attribute des Kundenterminals (2) umfassen, beispielsweise Parameter der Hardware des Kundenterminals (2) oder den Softwarestand des Kundenterminals (2).

9. Verfahren nach einem der Ansprüche 1 bis 8, **dadurch gekennzeichnet, dass** jede elektronische Übertragung von Daten vom Kundenterminal (2) auf das Payment Gateway (10) Integritätsdaten (16) aufweist, anhand denen das Payment Gateway (10) überprüfen kann, ob das Kundenterminal (2) integer ist oder durch eine Schadsoftware korrumpiert ist.

10. Verfahren zur Geldausgabe an einem Geldausgabeautomaten (106) mit einem mobilen Kundenterminal (2), beispielsweise einem Smartphone, das mit einem den Geldausgabevorgang steuernden Payment Gateway (10) eine vorzugsweise drahtlose Datenverbindung (4) aufbauen kann, und mit einem Geldausgabeautomaten (106), der mit dem Payment Gateway (10) eine Datenverbindung (8) aufbauen kann, wobei das Kundenterminal (2) in einer dem Payment Gateway (10) zugänglichen Kundendatenbank (12) registriert ist und in der Kundendatenbank (12) erste Identifikationsdaten (14) des Kunden (K) oder des Kundenterminals (2), Integritätsdaten (16) des Kundenterminals (2) sowie zweite Identifikationsdaten (18) des Kunden (K) oder des Kundenterminals (2) gespeichert sind, und wobei das Verfahren die folgenden Schritte aufweist:
• Starten eines durch Zugangsdaten (26) geschützten Anwendungsprogramms zum Geldabheben am Kundenterminal (2), und Aufbauen einer Datenverbindung (4) zwischen dem Kundenterminal (2) und dem Payment Gateway (10),
• elektronisches Übertragen der ersten Identifikationsdaten (14) einschließlich der Zugangsdaten (26) des Anwendungsprogramms und der Integritätsdaten (16) von dem Kundenterminal (2) an das Payment Gateway (10),
• Überprüfen, durch Vergleichen der vom Payment Gateway (10) empfangenen ersten Identifikationsdaten (14) und Integritätsdaten (16) mit den entsprechenden in der Kundendatenbank (12) gespeicherten Daten, ob das Kundenterminal (2) zur Teilnahme am Verfahren zugelassen ist und integer ist, und bejahendenfalls Starten einer Session zur Auslösung eines Geldausgabevorgang,
• Bestimmen des auszuzahlenden Betrages und vorzugsweise auch des zu belastenden Bankkontos am Kundenterminal (2) und elektronisches Übertragen dieser Daten von dem Kundenterminal (2) an das Payment Gateway (10),
• Zuordnen einer Transaktionsidentifikationszeichenfolge (154) zu dem Geldausgabevorgang durch das Payment Gateway (10) und elektronisches Übertragen der Transaktionsidentifikationszeichenfolge (154) von dem Payment Gateway (10) an das Kundenterminal (2),
• Übermitteln, auf einem von der Datenverbindung (4, 8) zwischen dem Kundenterminal (2) und dem Payment Gateway (10) und/oder zwischen dem Geldausgabeautomaten (106) und dem Payment Gateway (10) unabhängigen Übertragungsweg und unabhängig von der Laufzeitumgebung des Kundenterminals (2), der zweiten Identifikationsdaten (18) zusammen mit der Transaktionsidentifikationszeichenfolge (154) von dem Kunden (K) oder dem Kundenterminal (2) auf den Geldausgabeautomaten (106), insbesondere Eingeben der zweiten Identifikationsdaten (18) und der Transaktionsidentifikationszeichenfolge (154) an dem Geldausgabeautomaten (106),
• Überprüfen, durch Vergleichen der am Geldausgabeautomaten (106) eingegangenen zweiten Identifikationsdaten (18) und der Transaktionsidentifikationszeichenfolge (154) mit den entsprechenden in der Kundendatenbank (12) gespeicherten Daten, ob für den Kunden (K), dem die zweiten Identifikationsdaten (18) zugeordnet sind, eine Session zur Auslösung eines Geldausgabevorgang gestartet ist und ob die Transaktionsidentifikationszeichenfolge (154) gültig ist, und bejahendenfalls Ermitteln des auszuzahlenden Geldbetrages anhand der am Geldausgabeautomaten (106) eingegangenen Transaktionsidentifikationszeichenfolge (154) und Auszahlen des Geldbetrages am Geldausgabeautomaten (106).

11. System (1) zum Durchführen eines Verfahrens zum bargeldlosen Bezahlen nach einem der Ansprüche 1 bis 9 oder zur Geldausgabe an einem Geldausgabeautomaten (106) nach Anspruch 10 umfassend ein mobiles Kundenterminal (2), ein Händlerterminal (6) oder einen Geldausgabeautomaten (106) sowie ein das Verfahren steuerndes Payment Gateway (10), **dadurch gekennzeichnet, dass** das System (1) eine dem Payment Gateway (10) elektronisch zugängliche Kundendatenbank (12) umfasst, in welcher im Rahmen der Registrierung des Kundenterminals (2) übertragene Integritätsdaten (16) des Kundenterminals (2) gespeichert sind, und dass für das Payment Gateway (10) anhand eines Vergleiches von vom Kundenterminal (2) während eines Bezahlvorganges übertragenen Integritätsdaten (16) mit den in der Kundendatenbank (12) gespeicherten Integritätsdaten (12) überprüfbar ist, ob das Kundenterminal (2) integer ist oder durch eine Schadsoftware korrumpiert ist.
